# EUROPEAN PATENT SPECIFICATION

(11) **EP 2 681 362 B1**
(45) Date of publication and mention of the grant of the patent: **03.08.2016**
(21) Application number: 12752784.4
(22) Date of filing: 01.03.2012
(51) Int. Cl.: E02B 15/04, B63B 35/32, E02B 15/08

(54) **FLOATING BARRIER**
SCHWIMMENDE SPERRE
BARRIÈRE FLOTTANTE

(30) Priority: 01.03.2011 DK 201100139
(43) Date of publication of application: 08.01.2014
(73) Proprietor: Desmi Ro-Clean A/S, 5260 Odense S (DK)
(72) Inventor: RASMUSSEN, Lars Boldt, DK-5450 Otterup (DK); JENSEN, Steen, DK-5290 Marslev (DK); CHRISTENSEN, Thomas Aagaard, DK-5792 Årslev (DK); JENSEN, Hans Henrik, DK-5260 Odense S (DK)
(74) Representative: Gregersen, Niels Henrik
(86) International application number: PCT/DK2012/050066
(87) International publication number: WO 2012/116702

(56) References cited:
- DE-A1- 10 300 922
- GB-A- 1 403 611
- GB-A- 2 071 971
- US-A- 3 771 662
- US-A- 5 409 607
- US-B1- 7 056 059

## Description

### Field of the Invention

The present invention concerns a floating barrier system including a floating barrier and at least two liquid-penetrable auxiliary barriers, where the at least two liquid-penetrable auxiliary barriers are arranged in front of a floating barrier, and where the liquid-penetrating effect is achieved by a given degree of perforation, wherein the liquid barrier as well as the at least two liquid-penetrable floating barriers extend over a horizontal length from a first end to a second end at a vertical depth from an upper edge to an lower edge.

### Background of the Invention

By prior art floating barriers, the submerged part is typically constituted by an approximately vertical impenetrable wall which will block a given liquid flow that may try to pass it. As the liquid flow is also prevented from passing over the submerged part due to the overwater part, which is typically constituted by buoyant bodies, the liquid flow is forced to pass under the submerged part. This entails a local increase in speed of the water flow which is to pass under the submerged part. This means that a floating barrier which is moved through a liquid flow at e.g. 0.5 m/s locally can have liquid flows around the submerged part, particularly in a zone in front of the floating barrier (head wave effect), with double or triple speed. This occurs in particular in a zone upstream in relation to the floating barrier and in a area where a possible oil contamination can be located. By exceeding about 1 m/s in difference of the speed in the boundary layer between the oil layer and the water flow, entrainment of oil drops will begin, the drops being moved under the submerged part of the floating barrier which hereby is provided a leakage. By increased difference in speed, this effect will be increased and large amounts of oil will be entrained down under the floating barrier. For many years, this phenomenon has been known as the limiting element in the use of floating barriers which has caused the used towing vessels to be limited in manoeuvring and the oil collecting operation to be very time-consuming as well.

Use of supplementary, partially penetrable floating barriers in order to counteract the above limitations to the efficiency of floating barriers has been described and tested in the period 1990-1999 by various research groups. By these tests it has appeared that it is possible to increase the operational speed by a factor 2 - 3, but by using the present invention this factor is increased to more than 4.

US 3,771,662 discloses a solution where a plurality of successive floating barriers are applied where the rearmost floating barrier is a traditional floating barrier and where at the upper edge of two floating barriers in front are arranged a series of uniform apertures. Water and oil flow from the surface through these uniform openings when the floating barrier is towed through the water. These are very solid floating barriers which only can be moved at a low speed in order not to form a so-called head wave effect where water and oil are forced to speed up so to say and to be entrained in a flow under the floating barriers.

In order to avoid the inexpedient effect of head wave and oil escaping the floating barrier, a bottom is arranged in US 3,771,662 between two floating barriers such that in principle a basin is formed between the latter. This bottom is arranged at an angle with horizontal such that the depth increases towards the rearmost of the two floating barriers in question. All water is thus to flow through a relatively small number of apertures in the floating barrier at its upper edge and out of the mentioned basin through a number of apertures at the bottom of it and close to the rearmost of the floating barriers in question. Thus it is the area of the mentioned apertures that determine how fast the floating barrier can be moved and still be usable for efficient collection.

US 3,771,662 indicates a solution with large resistance when drawn through the water and which only will have a collecting effect at a very low speed, which obviously means that this is a less efficient solution which does not live up to the present demands to a rapid and efficient solution which in that case can prevent a natural catastrophe by rapid collection of spilled oil.

US 3,771,662 discloses the preamble of claim 1.

### Object of the Invention

It is the purpose of the invention to indicate a floating barrier system where the above mentioned drawbacks are counteracted and where it is possible to perform collection of e.g. oil from a water surface at a speed which is preferably about 300 to 400 % greater than hitherto.

### Description of the Invention

As mentioned in the introduction, the invention concerns one or more floating barriers for use together with a floating barrier for use in collecting oil on a water surface. The floating barriers are of the kind where the submerged part is partially penetrable for water and oil, thereby providing an impeding but not blocking effect on a passing flow of water. The function of the floating barriers is based on the fact that by disposition upstream relative to the floating barrier and together with the latter they will constitute a total system which can be moved through an oil-contaminated body of water with substantially greater speed than a floating barrier, without leaking oil behind the floating barrier system. The invention particularly concerns conditions of the geometry, spacing and draught of the water-penetrable liquid barriers. The new feature of a floating barrier system according to the invention as indicated in claim 1 is that at least one of the at least two liquid-penetrable auxiliary barriers is made with a degree of perforation which is different from at least one other liquid-penetrable auxiliary barrier. Hereby is achieved a graduated retardation of the water whereby an appreciably increased speed can be applied during towing of the floating barrier system by collection of spilled oil.

In a preferred variant of a floating barrier system according to the invention, the floating barrier system is arranged with a front/first liquid-penetrable auxiliary barrier with a first degree of perforation, and at least with one other liquid-penetrable auxiliary barrier with a second degree of perforation, wherein the front liquid-penetrable auxiliary barrier is provided with a greater degree of perforation than a subsequent liquid-penetrable auxiliary barrier. Hereby is introduced a graduated degree of penetrability between two or more floating barriers (auxiliary barriers) disposed upstream. However, this is so that the floating barrier encountering the liquid flow first has the greatest penetrability and thereby the lowest blocking action, the next slightly lower penetrability and possibly a third with even lower penetrability. This means that a passing liquid flow is gradually decelerated, thus encountering the blocking floating barrier at a speed which does not give any problems with regard to entrainment of oil and thereby leakage in the system. At the same time, the graduated retardation effect means that none of the penetrable auxiliary barriers will encounter the liquid flow at a critical speed relative to the "head wave" effect.

In an embodiment of the invention, a floating barrier system will be adapted such that that the degree of perforation of a liquid-penetrable auxiliary barrier is substantially uniform in its full horizontal length.

In another embodiment of the invention, a floating barrier system may be adapted such that that the degree of perforation of a liquid-penetrable auxiliary barrier varies over its horizontal length. By this variant of the invention is avoided that the effect of an unavoidable angling relative to the direction of flow is avoided. It is thus possible to adapt the size of the perforations of the auxiliary barrier such that the projected area facing in the direction of movement is more or less uniform irrespective of the auxiliary barrier having a U-shape, as it appears from the subsequent Figures.

In another embodiment of this embodiment, graduation of the draught of upstream disposed penetrable floating barriers forms a part. A floating barrier system according to the invention can be arranged such that the individual liquid-penetrable floating barriers have different vertical depth and where the front/first liquid-penetrable floating barrier is provided with the greatest depth. However, it may also be so that the front/first liquid-penetrable floating barrier has the lesser depth and that a subsequent liquid-penetrable floating barrier is provided with the greater depth. This will also entail a desirable graduated deceleration of the liquid flow.

In yet a preferred embodiment of this invention, at least one liquid-penetrable floating barrier may include one or more vertical crossbars extending from the upper edge of the at least one liquid-penetrable floating barrier towards its lower edge. The vertical crossbar or crossbars is/are disposed with suitable spacing with the object of ensuring vertical straightness of the auxiliary barriers in the liquid flow. This means that the penetrability of the auxiliary barriers is kept constant in vertical direction without needing graduation of the perforation.

Finally, the invention includes a characterisation of the mutual spacing of the constituent penetrable floating barriers and the distance to the blocking floating barrier behind. A preferred embodiment of a floating barrier system according to the invention can be adapted such that the spacing between the individual auxiliary barriers is made such that the spacing (b) is between 80 and 150% of the spacing (c), and that the spacing (a) is between 80 and 150% of the spacing (b).

### Description of the Drawing

The invention is explained in more detail in the following with reference to the drawings, wherein:
Fig. 1 shows a complete floating barrier system with three partially penetrable auxiliary barriers disposed upstream.
Fig. 2 shows a segment of the floating barrier system showing that the individual auxiliary barriers can have varying degree of perforation.
Fig. 3 shows a segment of the floating barrier system showing that the individual auxiliary barriers have horizontally varying degrees of perforation.
Fig. 4 shows a segment of the floating barrier system showing that the individual auxiliary barriers have varying draught.
Fig. 5 shows a segment of the floating barrier system showing that the individual auxiliary barriers have built-in vertical crossbars.
Fig. 6 shows a segment of the floating barrier system showing that the individual auxiliary barriers are provided with varying spacing.

In the explanation of the Figures, identical or corresponding elements will be provided with the same designations in different Figures. Therefore, no explanation of all details will be given in connection with each single Figure/embodiment.

### Detailed Description of the Invention

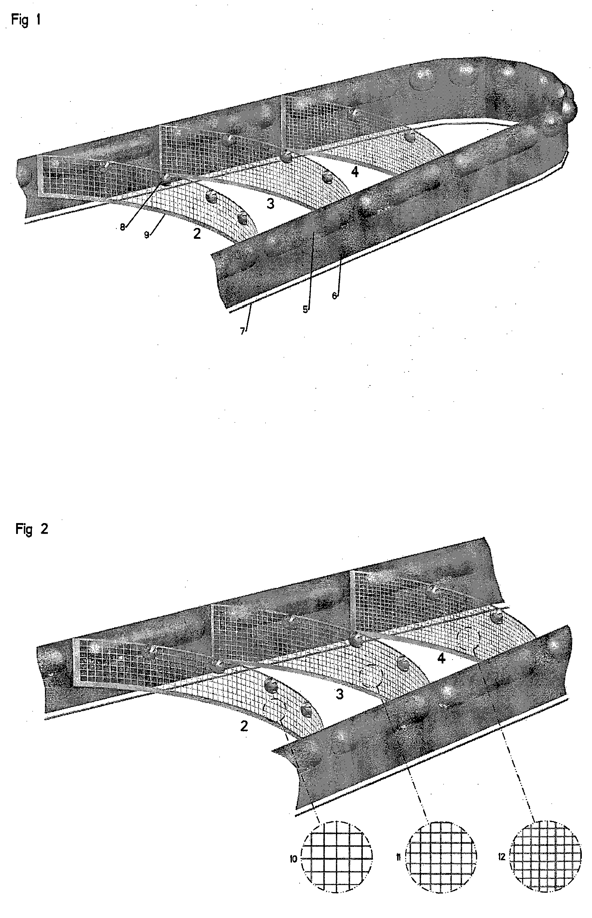

In Figs. 1-5 is seen the floating barrier 1 which in this system is arranged in U-shape. To this is fastened auxiliary barriers 2, 3, and 4 in upstream direction. The floating barrier is provided with consecutive buoyant bodies 5 which may be air-filled or with a permanent buoyancy means, e.g. plastic foam. These have the purpose of ensuring a stable position for the floating barrier at sea, also by possible wave action. The submerged part 6 is constituted by an impenetrable wall of e.g. reinforced rubber or plastic film. Typically, the wall has a draught corresponding to 0.5 to 1.5 times the diameter of the buoyant bodies (the freeboard). Along the lower edge of the wall is fastened a ballast 7 which can be in the form of an iron chain, lead rope or bolted metal blocks. The purpose of the ballast is to contribute to the stable position of the floating barrier at sea and to ensure vertical position of the submerged part. The auxiliary barriers 2, 3 and 4 on Figs. 1-5 are also provided with buoyancy means 8 and ballast 9 which have the same functions as in the floating barrier.

In Fig. 2 is shown that the auxiliary barriers 2, 3 and 4 have different degree of perforation 10, 11 and 12 providing varying penetrability for a liquid flow. The degree of perforation of the auxiliary barriers will typically be between 60 and 90%. This means that the open area constitutes between 60 and 90% of the total area of the submerged part. In the embodiment shown here, auxiliary barrier 2 which is disposed farthest upstream has a preferred degree of perforation of 75-85 %, auxiliary barrier 3 a degree of perforation of 70-80 % and auxiliary barrier 4 a degree of perforation of 65-75 %.

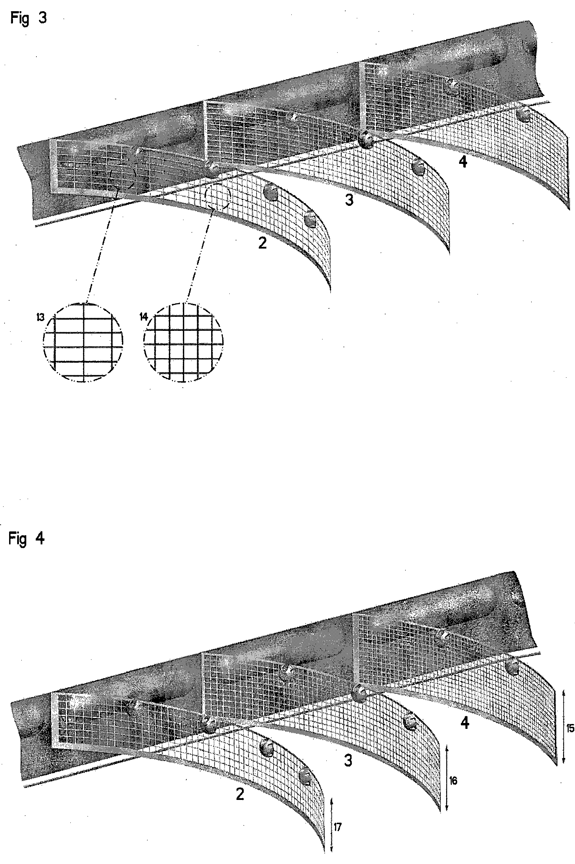

In Fig. 3 is shown that the auxiliary barriers 2, 3 and 4 have horizontally varied degree of perforation 13 and 14, respectively. The preferred embodiment of the latter entails that the flanks of the auxiliary barrier will have an angling relative to the liquid flow encountering the centre line of the floating barrier system will have a degree of perforation which compensates for this fact. This means that the projected degree of perforation becomes the same as in the central part of the auxiliary barrier. The performed perforation can either be made as stepwise variations or as a successive variation.

In Fig. 4 is shown that the auxiliary barriers have varied draughts 15, 16, and 17, respectively. In the embodiment preferred here, auxiliary barrier 15 is reduced to between 60 ad 90 % of the draught of the floating barrier. Auxiliary draught 16 is reduced to between 70 and 100% and auxiliary barrier 17 to between 80 and 100%.

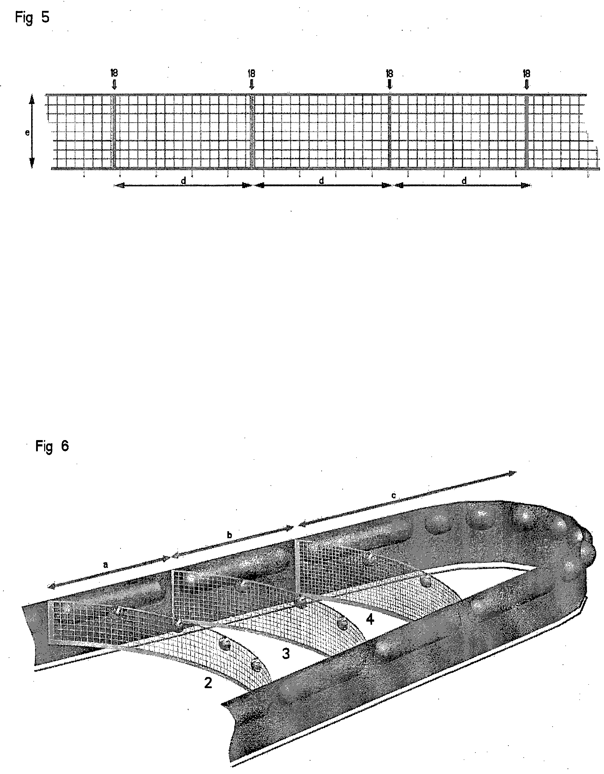

In Fig. 5 appears that the individual auxiliary barriers are provided with vertical crossbars 18. In the embodiment shown here, these are disposed with spacing (d) corresponding to 100 - 450% of the total height (e) of the auxiliary barriers.

In Fig. 6 is shown that the spacing (a) and (b) of the individual auxiliary barriers and the distance to the floating barrier (c) are varied. In the preferred embodiment here, the spacings between the individual auxiliary barriers 2, 3 and 4 are made such that the spacing (b) is between 80 and 150% of the spacing (c), and the spacing (a) is between 80 and 150% of the spacing (b).

## Claims

1. A floating barrier system including a floating barrier and at least two liquid-penetrable auxiliary barriers (2, 3, 4), where the at least two liquid-penetrable auxiliary barriers (2, 3, 4) are arranged in front of the floating barrier, and where the liquid-penetrating effect is achieved by a given degree of perforation, wherein the floating barrier as well as the at least two liquid-penetrable auxiliary barriers extend over a horizontal length from one end to another end at a vertical depth from an upper edge to a lower edge, **characterised in that** at least one of the at least two liquid-penetrable auxiliary barriers (2, 3, 4) are made with a degree of perforation which is different from at least one other liquid-penetrable auxiliary barrier (3, 4).

2. A floating barrier system according to claim 1, **characterised in that** the front/first liquid-penetrable auxiliary barrier (2) has a first degree of perforation (10), and at least one other liquid-penetrable auxiliary barrier (3) has a second degree of perforation (11), wherein the front liquid-penetrable auxiliary barrier (2) is provided with a greater degree of perforation (10) than a subsequent liquid-penetrable auxiliary barrier (3,4).

3. A floating barrier system according to claim 1 and/or 2, **characterised in that** the degree of perforation of a liquid-penetrable auxiliary barrier (2, 3, 4) is substantially uniform in its full horizontal length.

4. A floating barrier system according to claim 1 and/or 2, **characterised in that** the degree of perforation of a liquid-penetrable auxiliary barrier (2, 3, 4) varies over the horizontal length.

5. A floating barrier system according to any of claims 1 to 4, **characterised in that** the individual liquid-penetrable auxiliary barriers (2, 3, 4) have different vertical depths (15, 16, 17).

6. A floating barrier system according to claim 5, **characterised in that** the front/first liquid-penetrable auxiliary barrier (2) is provided with a greater depth than a subsequent liquid-penetrable auxiliary barrier (3, 4).

7. A floating barrier system according to claim 5, **characterised in that** the front/first liquid-penetrable auxiliary barrier (2) is provided with a lesser depth than a subsequent liquid-penetrable auxiliary barrier (3, 4).

8. A floating barrier system according to any of claims 1 to 7, **characterised in that** at least one liquid-penetrable auxiliary barrier (2, 3, 4) includes one or more vertical crossbars (18) extending from the upper edge of the at least one liquid-penetrable auxiliary barrier towards its lower edge.

9. A floating barrier system according to any preceding claim, **characterised in that** it comprises three liquid-penetrable auxiliary barriers (2,3,4), whereby a spacing (a) between the front/first liquid-penetrable auxiliary barrier (2) and the second liquid-penetrable auxiliary barrier (3) is between 80 and 150% of a spacing (b) between the second liquid-penetrable auxiliary barrier (3) and the third liquid-penetrable auxiliary barrier (4), where the spacing (b) is between 80 and 150% of a spacing (c) between the third liquid-penetrable auxiliary barrier (4) and the floating barrier.

## Patentansprüche

1. Schwimmendes Sperrsystem, umfassend eine schwimmende Sperre und mindestens zwei von Flüssigkeit durchdringbare Hilfssperren (2, 3, 4), wobei die mindestens zwei von Flüssigkeit durchdringbaren Hilfssperren (2, 3, 4) vor der schwimmenden Sperre angeordnet sind und wobei der Effekt der Flüssigkeitsdurchdringung durch einen bestimmten Perforationsgrad erreicht wird, wobei sich die schwimmende Sperre sowie die mindestens zwei von Flüssigkeit durchdringbaren Hilfssperren über eine horizontale Länge von einem Ende zu einem anderen Ende bei einer vertikalen Tiefe von einer oberen Kante zu einer unteren Kante erstrecken, **dadurch gekennzeichnet, dass** mindestens eine der mindestens zwei von Flüssigkeit durchdringbaren Hilfssperren (2, 3, 4) mit einem Perforationsgrad hergestellt ist, der sich von mindestens einer anderen von Flüssigkeit durchdringbaren Hilfssperre (3, 4) unterscheidet.

2. Schwimmendes Sperrsystem nach Anspruch 1, **dadurch gekennzeichnet, dass** die vordere/erste von Flüssigkeit durchdringbare Hilfssperre (2) einen ersten Perforationsgrad (10) aufweist und mindestens eine andere von Flüssigkeit durchdringbare Hilfssperre (3) einen zweiten Perforationsgrad (11) aufweist, wobei die vordere von Flüssigkeit durchdringbare Hilfssperre (2) mit einem höheren Perforationsgrad (10) versehen ist als eine nachfolgende von Flüssigkeit durchdringbare Hilfssperre (3, 4).

3. Schwimmendes Sperrsystem nach Anspruch 1 und/oder 2, **dadurch gekennzeichnet, dass** der Perforationsgrad einer von Flüssigkeit durchdringbaren Hilfssperre (2, 3, 4) im Wesentlichen über ihre vollständige horizontale Länge einheitlich ist.

4. Schwimmendes Sperrsystem nach Anspruch 1 und/oder 2, **dadurch gekennzeichnet, dass** der Perforationsgrad einer von Flüssigkeit durchdringbaren Hilfssperre (2, 3, 4) über die horizontale Länge variiert.

5. Schwimmendes Sperrsystem nach einem der Ansprüche 1 bis 4, **dadurch gekennzeichnet, dass** die einzelnen von Flüssigkeit durchdringbaren Hilfssperren (2, 3, 4) unterschiedliche vertikale Tiefen (15, 16, 17) aufweisen.

6. Schwimmendes Sperrsystem nach Anspruch 5, **dadurch gekennzeichnet, dass** die vordere/erste von Flüssigkeit durchdringbare Hilfssperre (2) eine größere Tiefe als eine nachfolgende von Flüssigkeit durchdringbare Hilfssperre (3, 4) aufweist.

7. Schwimmendes Sperrsystem nach Anspruch 5, **dadurch gekennzeichnet, dass** die vordere/erste von Flüssigkeit durchdringbare Hilfssperre (2) mit einer geringeren Tiefe als eine nachfolgende von Flüssigkeit durchdringbare Hilfssperre (3, 4) versehen ist.

8. Schwimmendes Sperrsystem nach einem der Ansprüche 1 bis 7, **dadurch gekennzeichnet, dass** mindestens eine von Flüssigkeit durchdringbare Hilfssperre (2, 3, 4) eine oder mehrere vertikale Querstreben (18) umfasst, die sich von der oberen Kante der mindestens einen von Flüssigkeit durchdringbaren Hilfssperre zu ihrer unteren Kante erstrecken.

9. Schwimmendes Sperrsystem nach einem der vorstehenden Ansprüche, **dadurch gekennzeichnet, dass** es drei von Flüssigkeit durchdringbare Hilfssperren (2, 3, 4) umfasst, wobei ein Abstand (a) zwischen der vorderen/ersten von Flüssigkeit durchdringbaren Hilfssperre (2) und der zweiten von Flüssigkeit durchdringbaren Hilfssperre (3) zwischen 80 und 150 % eines Abstands (b) zwischen der zweiten von Flüssigkeit durchdringbaren Hilfssperre (3) und der dritten von Flüssigkeit durchdringbaren Hilfssperre (4) beträgt, wobei der Abstand (b) zwischen 80 und 150 % eines Abstands (c) zwischen der dritten von Flüssigkeit durchdringbaren Hilfssperre (4) und der schwimmenden Sperre beträgt.

## Revendications

1. Système de barrière flottante comprenant une barrière flottante et au moins deux barrières auxiliaires pénétrables pour les liquides (2, 3, 4), les au moins deux barrières auxiliaires pénétrables pour les liquides (2, 3, 4) sont disposées devant la barrière flottante, et l'effet des liquides pénétrables est obtenu par un certain degré de perforation, dans lequel la barrière flottante ainsi que les au moins deux barrières auxiliaires pénétrables pour les liquides s'étendent sur une longueur horizontale à patir d'une extrémité à une autre extrémité à une profondeur verticale depuis un bord supérieur jusqu'à un bord inférieur, **caractérisé en ce qu**'au moins une d'au moins deux barrières auxiliaires pénétrables pour les liquides (2, 3, 4) est fabriquée avec un certain degré de perforation différent d'au moins une autre barrière auxiliaire pénétrable pour les liquides (3, 4).

2. Système de barrière flottante selon la revendication 1, **caractérisé en ce que** la première barrière auxiliaire pénétrable pour les liquides (2) comprend un premier degré de perforation (10), et au moins une autre barrière auxiliaire pénétrable pour les liquides (3) comprend un deuxième degré de perforation (11), dans lequel la première barrière auxiliaire pénétrable pour les liquides (2) est pourvue d'un degré de perforation (10) plus élevé que celui de la barrière auxilière pénétrable pour les liquides suivante (3, 4).

3. Système de barrière flottante selon la revendication 1 et/ou 2, **caractérisé en ce que** le degré de perforation d'une barrière auxiliaire pénétrable pour les liquides (2, 3, 4) est sensiblement uniforme sur toute sa longueur horizontale.

4. Système de barrière flottante selon la revendication 1 et/ou 2, **caractérisé en ce que** le degré de perforation d'une barrière auxiliaire pénétrable pour les liquides (2, 3, 4) varie sur la longueur horizontale.

5. Système de barrière flottante selon l'une quelconque des revendications 1 à 4, **caractérisé en ce que** les barrières auxiliaires pénétrables pour les liquides individuelles (2, 3, 4) possèdent des profondeurs verticales différentes (15, 16, 17).

6. Système de barrière flottante selon la revendication 5, **caractérisé en ce que** la première barrière auxiliaire pénétrable pour les liquides (2) est pourvue d'une profondeur plus grande que celle d'une barrière auxiliaire pénétrable pour les liquides suivante (3, 4).

7. Système de barrière flottante selon la revendication 5, **caractérisé en ce que** la première barrière auxiliaire pénétrable pour les liquides (2) est pourvue d'une profondeur moindre que celle d'une barrière auxiliaire pénétrable pour les liquides suivante (3, 4).

8. Système de barrière selon l'une quelconque des revendications 1 à 7, **caractérisé en ce qu**'au moins une barrière auxiliaire pénétrable pour les liquides (2, 3, 4) comprend une ou plusieurs barres verticales (18) s'étendant à partir du bord supérieur d'au moins une barrière auxiliaire pénétrable pour les liquides vers son bord inférieur.

9. Système de barrière flottante selon l'une quelconque des revendications précédentes, **caractérisé en ce qu**'il comprend trois barrières auxiliaires pénétrables pour les liquides (2, 3, 4), un espace (a) se trouve entre la première barrière auxiliaire pénétrable pour les liquides (2) et la deuxième barrière auxiliaire pénétrable pour les liquides (3) et se situant entre 80 et 150 % par rapport à l'espace (b) entre la deuxième barrière auxiliaire pénétrable pour les liquides (4) et la troisième barrière auxiliaire pénétrable pour les liquides (4), l'espace (b) se situe entre 80 et 150 % par rapport à l'espace (c) entre la troisième barrière auxiliaire pénétrable pour les liquides (4) et la barrière flottante.
